Europäisches Patentamt

European Patent Office

Office européen des brevets

(19)

(11) Numéro de publication: **0 271 372**
**A1**

## (12) DEMANDE DE BREVET EUROPEEN

(21) Numéro de dépôt: 87402460.7

(22) Date de dépôt: 02.11.87

(51) Int. Cl.⁴: **B 63 B 1/38**

(30) Priorité: 24.11.86 FR 8616313

(43) Date de publication de la demande:
15.06.88 Bulletin 88/24

(84) Etats contractants désignés:
BE DE ES GB GR IT NL SE

(71) Demandeur: de Pingon, Pierre Joseph
7 Avenue du Parmelan
F-74000 Annecy (FR)

(72) Inventeur: de Pingon, Pierre Joseph
7 Avenue du Parmelan
F-74000 Annecy (FR)

(74) Mandataire: Laget, Jean-Loup et al
Cabinet Pierre Loyer 77, rue Boissière
F-75116 Paris (FR)

(54) Catamaran à effet de surface.

(57) Sous les flotteurs 1 sont disposées des chambres 5 alimentées en air comprimé de sustentation. Les flotteurs contiennent des réservoirs accumulateur d'air comprimé à pression élevée alimentés par un compresseur 13. Ces réservoirs sont reliés aux chambres 5 par des valves 14 dont l'ouverture est commandée par le niveau inférieur 28 de l'eau dans les chambres 5.

Fig. 2

EP 0 271 372 A1

**Description**

## Catamaran à effet de surface

L'invention concerne un catamaran à effet de surface.

Divers moyens sont actuellement employés pour augmenter la vitesse des navires de service, notamment des car-ferries, sans augmenter en proportion les puissances nécessaires.

L'un de ces moyens consiste à interposer entre la surface de l'eau et la partie inférieure de la coque du navire une couche d'air destinée à diminuer le frottement de la coque sur l'eau. Pour ce faire, on enferme de l'air comprimé, à l'aide d'une jupe souple sous le navire. Cela pose toutefois des problèmes délicats.

Tout d'abord ces jupes ont deux impératifs contradictoires : retenir l'air de sustentation en épousant le mieux possible la surface liquide agitée, et freiner le moins possible l'avancement du navire. Si la jupe est très souple pour épouser la surface liquide, elle laisse échapper trop d'air ; si elle est très raide, elle freine le navire par les chocs violents engendrés à grande vitesse sur la surface liquide.

D'autre part, le navire resposant sur un coussin d'air suit les mouvements de la surface liquide et n'a aucune stabilité latérale et longitudinale. On est donc amené, pour améliorer un peu les choses, à l'élargir considérablement. Cependant, le résultat reste médiocre et on fait ces bateaux ne peuvent naviguer que par mer calme ou peu agitée, ce qui est rédhibitoire pour des services réguliers.

De plus, il est douteux que l'on économise de la puissance car il en faut beaucoup au compresseur pour alimenter l'air de sustentation en perte constante, et le freinage dû aux jupes est considérable.

Enfin, la fiabilité du système est aléatoire et le coût de la construction de ces navires est très élevé.

Un but de la présente invention est de proposer un catamaran à effet de surface, affranchi des inconvénients précités, de grande stabilité et de grande sécurité même par mer agitée, de bonne fiabilité, de faible coût de construction, et susceptible de se déplacer à grande vitesse avec une puissance minimale.

La présente invention a pour objet un catamaran à effet de surface, du type comportant deux flotteurs parallèles et une plate-forme de service ou cabine, caractérisé en ce que chaque flotteur comporte une partie inférieure concave, en forme de voûte, constituant avec le niveau inférieur de l'eau une chambre dans laquelle est insufflé de l'air comprimé de sustentation.

Selon d'autres caractéristiques de l'invention :
- la chambre contenant le volume d'air de sustentation logé sous la partie inférieure concave du flotteur est séparée dans la sens longitudinal en plusieurs compartiments au moyen de cloisons verticales transversales portant à leur base une lèvre en caoutchouc affleurant le niveau inférieur de l'eau;
- les flotteurs constituent des réservoirs d'air comprimé, alimentés par un compresseur d'air, et susceptibles d'être reliés à la chambre contenant l'air de sustentation;
- la liaison entre un réservoir d'air comprimé et la chambre contenant l'air de sustentation est assurée par une valve dont la tige de commande est reliée à un flotteur reposant sur le niveau inférieur de l'eau, de sorte qu'une perte d'air de sustentation entraînant une remontée du niveau inférieur de l'eau entraîne un remontée corrélative du flotteur et l'ouverture de la valve, assurant ainsi l'alimentation en air comprimé de la chambre ;
- les flotteurs sont divisés en compartiments étanches dont certains sont destinés à constituer des réservoirs accumulateurs d'air comprimé à pression élevée ;
- chaque compartiment de la chambre d'air de sustentation est alimenté par un réservoir accumulateur d'air comprimé à pression élevée, cette disposition ayant pour but de compenser instantanément les pertes d'air avec une faible puissance installée au compressuer.

D'autres caractéristiques ressortent de la description qui suit faite avec référence au dessin annexé sur lequel on peut voir ;

Figure 1 : une vue schématique générale de dessous d'un catamaran selon l'invention ;

Figure 2 : une vue schématique en coupe transversale d'un flotteur du catamaran selon l'invention.

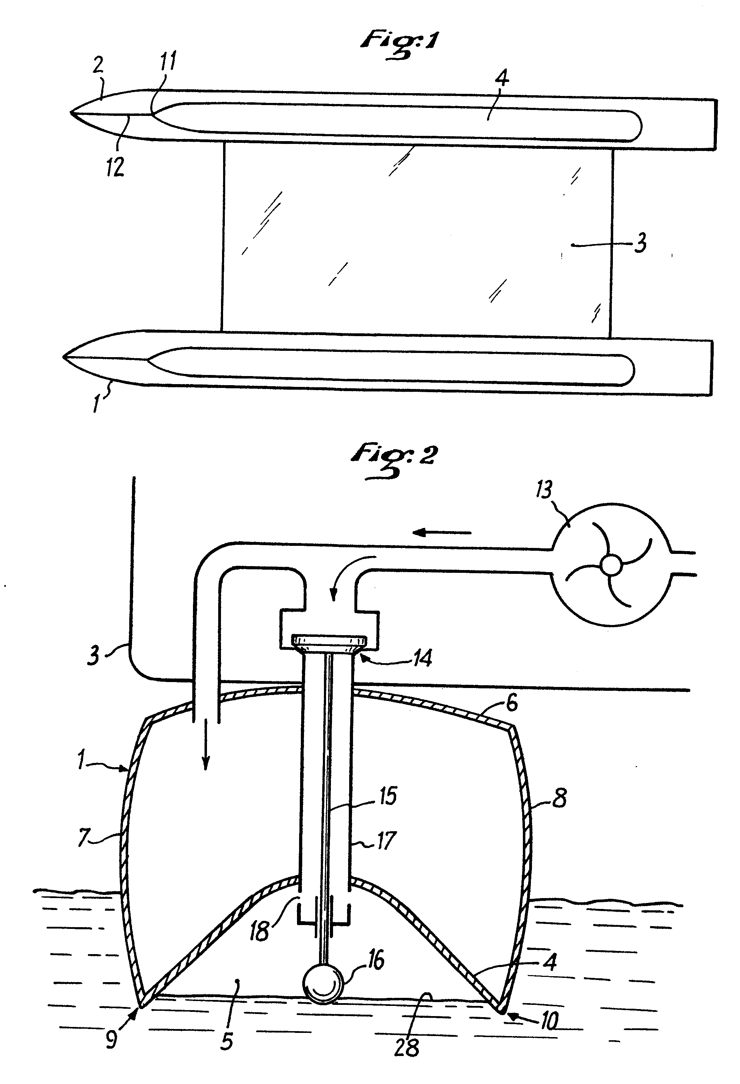

En se reportant au dessin, on peut voir que le catamaran selon l'invention se compose de deux flotteurs 1 et 2 (figure 1) parallèles et d'une plate-forme de service 3 de type classique. Chaque flotteur 1, 2 présente, sur la majeure partie de sa longueur, un fond 4 concave, en forme de voûte, de façon à constituer sous le flotteur une cavité 5 susceptible d'être remplie d'air. Cette forme de voûte offre l'avantage d'une bonne résistance à la pression de l'air de sustentation et à l'air des réservoirs accumulateurs. Le flotteur présente une paroi supérieure 6, deux parois latérales 7 et 8, et le fond 4 concave. Le fond 4 rejoint vers le bas chacune des parois latérales 7, 8, constituant ainsi deux quilles latérales 9, 10. Lorsque la chambre 5 est remplie d'air, le niveau de l'eau sous la chambre s'établit légèrement au dessus de la pointe des deux quilles 9 et 10 (figure 2). Ces deux quilles se rejoignent vers l'avant au point 11 constituant l'étrave 12. Elles ferment ainsi le volume d'air de la chambre 5 vers l'avant. Vers l'arrière, la voûte s'abaisse vers la surface de l'eau, fermant le volume d'air de la chambre 5 sur l'arrière et permettant l'installation du système propulsif s'il y a lieu.

La plate-forme de service 3 porte au moins un compresseur d'air 13 susceptible d'alimenter en air comprimé les chambres 5 ménagées sous les flotteurs. Selon un mode particulier de réalisation, cette alimentation en air comprimé est contrôlée par une valve 14, dont la tige de commande 15 est solidaire d'un flotteur 16 qui suit le niveau de l'eau sous la chambre 5, ou niveau inférieur. La tige 15 est guidée pour se déplacer axialement dans un cylindre 17 portant le siège de la valve 14 et communiquant par des passages 18, à sa partie inférieure, avec la chambre 5.

Avantageusement, on utilise au moins un réservoir accumulateur d'air comprimé, alimenté directement par le compresseur 13. Selon l'invention, on utilise comme réservoirs les flotteurs eux-mêmes, ou du moins des compartiments ménagés dans ces flotteurs.

Chaque réservoir communique avec un compartiment du coussin d'air par une valve 14 commandée par un flotteur profilé 16 en contact avec le niveau inférieur 28. Si ce niveau monte, le flotteur 16 monte aussi et provoque brusquement l'ouverture intégrale de la valve 14, permettant à l'air du réservoir accumulateur de rétablir instantanément le niveau inférieur ; le flotteur s'abaisse alors et la valve se referme.

Pour permettre de diminuer la puissance du compresseur, l'air de sustentation doit s'échapper le moins possible. Il faut donc que les quilles s'enfoncent dans l'eau d'une hauteur minimale pour éviter les fuites dues au mouvement de l'eau. Cette hauteur est d'autant plus faible que les quilles suivent le mieux possible la surface liquide. Pour ce faire, on a intérêt à rendre indépendants les flotteurs entre eux dans le sens vertical, de façon que l'un des flotteurs s'élevant à la vague n'entraîne pas l'autre au-dessus de la surface liquide en laissant s'échapper l'air porteur (cela peut se faire avec des moyens divers et multiples).

On peut également prévoir, pour limiter les fuites d'air en cas de grosse mer, de diviser le volume d'air dans le sens de la longueur en plusieurs compartiments, par plusieurs séparations munies à leur base de lèvres souples, au ras du niveau liquide établi à l'intérieur du volume d'air. Il est à noter qu'il n'y aura alors que très peu de frottement sur cette surface qui, intérieure, est tout-à-fait calme et stable à un niveau bien défini, légèrement au-dessus de la pointe des quilles.

Pour les petits navires naviguant en eaux calmes, le seul fait de les poser sur l'eau enferme sous chaque flotteur un volume d'air suffisant pour produire, par simple compression sous le poids du navire, un coussin d'air porteur.

Pour des navires plus importants destinés à la navigation tous temps, un compresseur de faible puissance attelé aux moteurs de propulsion ou à un moteur auxiliaire fournit l'air à la pression nécessaire, compensant les pertes possibles. On peut utiliser quelques compartiments étanches des flotteurs comme réservoirs accumulateurs intermédiaires de façon à compenser instantanément les pertes sans augmenter exagérément la puissance installée pour le compresseur, la pression dans les réservoirs étant beaucoup plus élevée que la pression de l'air de sustentation de façon que la compensation des pertes se fasse instantanément.

La communication entre les volumes porteurs sous les flotteurs et les réservoirs accumulateurs se fait par le haut de ceux-ci pour des raisons évidentes de sécurité.

L'ensemble est construit pour que le niveau inférieur s'établisse légèrement au-dessus de la pointe des quilles pour éviter les fuites d'air de sustentation. Ce niveau s'établissant d'ailleurs par rapport au niveau général selon la pression de sustentation. Pour réduire les surfaces mouillées, on a donc intérêt à diminuer cette pression, c'est-à-dire à élargir les flotteurs pour qu'ils s'enfoncent moins dans l'eau. Un compromis est donc à établir pour chaque cas entre cette pression et la hauteur minimale immergée pour éviter les pertes d'air.

La surface mouillée est donc seulement l'extérieur des quilles, c'est-à-dire minimale, réduisant ainsi la résistance à l'avancement et améliorant les performances du navire.

Le catamaran selon l'invention présente un certain nombre d'avantages, et notamment :

1- Les conditions sont réunies pour obtenir une grande vitesse avec une puissance minimale :

. les flotteurs sont longs et fins et leur pénétration dans l'eau se fait avec un minimum de résistance, car ils sont portés par l'air et s'enfoncent peu dans l'eau, et les surfaces mouillées freinant le navire sont considérablement réduites par rapport à un catamaran classique ;

. il n'y a pas de freinage dû aux jupes ;

. le maintien de la pression d'air de sustentation demande un minimum de puissance car il n'y a pas de pertes importantes.

2- La stabilité latérale du navire est assurée par tous temps.

En effet, la disposition très écartée des surfaces d'appui d'air en deux longues bandes donne un couple de stabilité latérale important, les flotteurs ne pouvant s'enfoncer dans l'eau qu'en augmentant la pression de l'air de sustentation qui donne aussitôt une réaction en redressant le navire. Les mouvements sont donc peu importants, même par grop temps.

3- La stabilité longitudinale est bonne du fait même de la longueur des flotteurs, de la division, longitudinalement, du volume de sustentation, et parce que l'enfoncement des flotteurs par l'avant ou l'arrière provoque immédiatement une poussée de l'eau correspondant à l'enfoncement.

4- La longueur des flotteurs et leur finesse a tendance à égaliser la surface de l'eau, d'où un confort accru.

5- La construction est simple et sans problème technique. On obtient donc à la fois un coût de construction minimal et une très bonne fiabilité.

En résumé, les catamarans à effet de surface selon l'invention sont :

- très rapides pour une puissance minimale;
- très stables et sûrs par tous temps;
- très fiables;
- peu coûteux de réalisation.

**Revendications**

1. Catamaran à effet de surface, du type comportant deux flotteurs parallèles et une plate-forme de service ou cabine, caractérisé en ce que chaque flotteur (1, 2) comporte une partie inférieure (4) concave, en forme de voûte, constituant avec le niveau inférieur (28) de l'eau une chambre (5) dans laquelle est insufflé de l'air comprimé de sustentation.

2. Catamaran selon la revendication 1, caractérisé en ce que la chambre (5) contenant le volume d'air de sustentation logé sous la partie inférieure concave (4) du flotteur (1, 2) est séparée en plusieurs compartiments au moyen de cloisons verticales transversales portant à leur base une lèvre en caoutchouc affleurant le niveau inférieur (28) de l'eau.

3. Catamaran selon la revendication 1, caractérisé en ce que les flotteurs (1, 2) constituent des réservoirs accumulateurs d'air comprimé, alimentés par un compresseur d'air (13), et susceptibles d'être reliés à la chambre (5) contenant l'air de sustentation.

4. Catamaran selon la revendication 3, caractérisé en ce que la liaison entre un réservoir d'air comprimé et la chambre (5) contenant l'air de sustentation est assurée par une valve (14) dont la tige (15) de commande est reliée à un flotteur (16) reposant sur le niveau inférieur (28) de l'eau, de sorte qu'une perte d'air de sustentation entraînant une remontée du niveau inférieur (28) de l'eau entraîne un remontée corrélative du flotteur (16) et l'ouverture de la valve (14), assurant ainsi l'alimentation en air comprimé de la chambre (5).

5. Catamaran selon la revendication 1, caractérisé en ce que les flotteurs (1, 2) sont divisés en compartiments étanches dont certains sont destinées à constituer des réservoirs accumulateurs d'air comprimé à pression élevée.

6. Catamaran selon l'ensemble des revendications 2 et 5, caractérisé en ce que chaque compartiment de la chambre (5) est alimenté par un réservoir accumulateur d'air comprimé à pression élevée, cette disposition ayant pour but de compenser instantanément les pertes d'air avec une faible puissance installée au compresseur.

0271372

## Fig. 1

## Fig. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-1 596 846 (A. LE GOUILLE)<br>* Figures 1,2; page 1 *<br>--- | 1 | B 63 B 1/38 |
| A | DE-A-1 556 447 (H. BECHE)<br>* En entier *<br>--- | 1,4 | |
| A | FR-A-2 280 540 (J.M. FIACRE)<br>* Page 1, lignes 13-19; page 2, lignes 6-12; page 4, lignes 18-21; page 8, lignes 1-25; figures 1,6 *<br>--- | 1,3,5,6 | |
| A | US-A-3 595 191 (J.W. GRUNDY)<br>* Colonnes 1,2; figures 1,2,4,6 *<br>--- | 1-4 | |
| A | US-A-3 040 688 (K.F. GRAM)<br>* Colonnes 1,2; colonne 4, lignes 49-75; colonne 5; figures 1,6 *<br>--- | 1,2,3,4,6 | |
| A | AU-A-3 554 668 (A. DIRCKS)<br>* Page 9; figures 1-9 *<br>--- | 1,2 | DOMAINES TECHNIQUES RECHERCHES (Int. Cl.4) |
| A | FR-A-2 566 734 (J.A. GONZALES)<br>* Page 8; figures 1,2 *<br>----- | 1,2 | B 63 B<br>B 60 V |

Le présent rapport a été établi pour toutes les revendications

| Lieu de la recherche | Date d'achèvement de la recherche | Examinateur |
|---|---|---|
| LA HAYE | 12-02-1988 | VISENTIN, M. |

EPO FORM 1503 03.82 (P0402)